(19) Europäisches Patentamt
European Patent Office
Office européen des brevets

(11) Veröffentlichungsnummer: **0 195 928**
**B1**

(12) # EUROPÄISCHE PATENTSCHRIFT

(45) Veröffentlichungstag der Patentschrift: **18.10.89**

(51) Int. Cl.⁴: **C 07 C 119/048**, C 07 C 118/02, C 08 G 18/77

(21) Anmeldenummer: **86102100.4**

(22) Anmeldetag: **18.02.86**

(54) **4,4'-Diisocyanato-phenylbenzylether, ein Verfahren zu seiner Herstellung und seine Verwendung als Isocyanatkomponente bei der Herstellung von Polyurethankunststoffen.**

(30) Priorität: **28.02.85 DE 3507021**

(43) Veröffentlichungstag der Anmeldung:
**01.10.86 Patentblatt 86/40**

(45) Bekanntmachung des Hinweises auf die Patenterteilung:
**18.10.89 Patentblatt 89/42**

(84) Benannte Vertragsstaaten:
**BE DE FR GB IT NL SE**

(56) Entgegenhaltungen:
**DE-A- 3 138 421**
**US-A- 3 180 883**

(73) Patentinhaber: **BAYER AG,**
**D-5090 Leverkusen 1 Bayerwerk (DE)**

(72) Erfinder: **König, Klaus, Dr., Zum Hahnenberg 40,**
**D-5068 Odenthal (DE)**
Erfinder: **Heitkämper, Peter, Dr., Fliederweg 14,**
**D-4047 Dormagen 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft 4,4' -Diisocyanato–phenylbenzylether, ein Verfahren zu seiner Herstellung durch Umsetzung von 4,4' -Diamino–phenylbenzylether mit Phosgen, sowie seine Verwendung als Isocyanatkomponente bei der Herstellung von Polyurethankunststoffen.

Die Eigenschaften von Polyurethankunststoffen, insbesondere von Polyurethanelastomeren hängen u.a. wesentlich von der Natur des bei der Herstellung der Kunststoffe eingesetzten Polyisocyanats ab. Besonders hochwertige Polyurethanelastomere werden so beispielsweise bei Verwendung von 1,5–Diisocyanatonaphthalin als Diisocyanatkomponente erhalten. Insbesondere zeichnen sich Giesselastomere auf Basis dieses Diisocyanats durch hervorragende mechanische Eigenschaften aus (vgl. z.B. Becker, Braun, Kunststoff-Handbuch, Band 7, 2. Auflage, (1983), Carl Hanser Verlag).

1,5-Diisocyanatonaphthalin ist jedoch mit dem Nachteil behaftet, dass der zu seiner Herstellung eingesetzte Grundrohstoff, Naphthalin, nur in beschränkten Mengen zur Verfügung steht. Die Nitrierung von Naphthalin führt ausserdem zwangsläufig zu einem Isomerengemisch von Nitronaphthalinen, aus dem 1,5-Dinitronaphthalin isoliert werden muss. Die destillative Reinigung des 1,5-Diisocyanatonaphthalins, welches aus der Dinitroverbindung durch Hydrierung und anschliessende Phosgenierung des resultierenden Diamins erhalten wird, bereitet ebenfalls Schwierigkeiten, da es zur Sublimation neigt. Dies alles führt dazu, dass 1,5-Diisocyanatonaphthalin mit hohen Kosten belastet ist.

Auch die Verarbeitung von 1,5-Diisocyanatonaphthalin ist häufig problematisch, weil sein Schmelzpunkt und sein Dampfdruck relativ hoch sind. Diese Eigenschaften erlauben es oft nicht, 1,5-Diisocyanatonaphthalin ohne weiteres als Schmelze umzusetzen. Es sind dann technisch aufwendige Verarbeitungsmethoden und Schutzmassnahmen erforderlich, um chemische und arbeitsmedizinische Schwierigkeiten zu vermeiden.

Es hat daher nicht an Versuchen gefehlt, für 1,5-Diisocyanatonaphthalin als Diisocyanatkomponente bei der Herstellung hochwertiger Polyurethankunststoffe einen gleichwertigen Ersatz zu finden.

So ist beispielsweise in DE-OS 31 38 421 und DE-OS 31 38 422 die Herstellung von Polyurethan-Elastomeren unter Verwendung von 4,4'-Diisocyanato-diphenylethan-(1, 2) als Diisocyanat-Komponente beschrieben. Zwar können mit diesem Diisocyanat Kunststoffe mit guten mechanischen Eigenschaften erhalten werden; jedoch ist die Herstellung von 4,4'-Diisocyanato-diphenylethan-(1, 2) sehr umständlich und aufwendig und bis jetzt auch technisch schwer realisierbar.

Weiterhin sind zahlreiche Versuche unternommen worden, das vergleichsweise kostengünstige 4,4'-Diisocyanato-diphenylmethan anstelle von 1,5-Diisocyanatonaphthalin zur Herstellung von hochwertigen Polyurethanelastomeren zu verwenden, jedoch sind bislang alle Versuche gescheitert, auf Basis dieses Diisocyanats Polyurethanelastomere herzustellen, die bezüglich ihrer mechanischen und thermischen Eigenschaften den Polyurethanelastomeren auf Basis von 1,5-Diisocyanatonaphthalin entsprechen.

Es war daher die Aufgabe der vorliegenden Erfindung, ein neues Diisocyanat zur Verfügung zu stellen, welches bezüglich seiner Eignung zur Herstellung von hochwertigen Polyurethanelastomeren dem 1,5-Diisocyanatonaphthalin vergleichbar ist und welches sich nach einfachen Verfahren kostengünstig herstellen lässt.

Diese Aufgabe konnte durch die Bereitstellung von 4,4'-Diisocyanato-phenylbenzylether der Formel

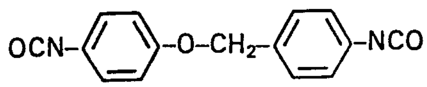

bzw. dem Verfahren zu seiner Herstellung gelöst werden.

Gegenstand der Erfindung ist 4,4'-Diisocyanato-phenylbenzylether.

Gegenstand der Erfindung ist auch ein Verfahren zur Herstellung von 4,4'-Diisocyanato-phenylbenzylether, dadurch gekennzeichnet, dass man 4,4'-Diamino-phenylbenzylether in an sich bekannter Weise mit Phosgen umsetzt.

Gegenstand der Erfindung ist auch die Verwendung von 4,4'-Diisocyanato-phenylbenzylether als Isocyanatkomponente bei der Herstellung von Polyurethankunststoffen nach dem Isocyanat-Polyadditionsverfahren.

Der bei der Durchführung des erfindungsgemässen Verfahrens als Ausgangsmaterial verwendete 4,4'-Diaminophenylebenzylether der Formel

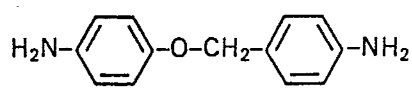

ist bekannt und in der Literatur beschrieben, beispielsweise in Vysokomol. Soedin., Ser. A, Jahrgang 1979, Seiten 1075 bis 1083; Chemical Abstracts, Band 91, 57576a, Jahrgang 1979. Das Diamin wird zweckmässig aus der entsprechenden Dinitroverbindung durch katalytische Hydrierung hergestellt. Selbstverständlich kann für das erfindungsgemässe Verfahren das Diamin auch nach jeder beliebigen anderen Methode hergestellt werden.

Der dem Diamin zugrunde liegende 4,4'-Dinitro-phenylbenzylether ist leicht zugänglich. Er kann beispielsweise durch Kondensation von Alkali-4-nitrophenolat mit 4-Nitrobenzylchlorid oder nach einer beliebigen anderen Methode hergestellt werden.

Das erfindungsgemäss zu phosgenierende Diamin kann beim erfindungsgemässen Verfahren in technischer Reinheit, wie es bei seiner Herstellung anfällt, oder auch in gereinigter Form zum Einsatz gelangen. Seine Reinigung kann beispielsweise durch Lösen in Dimethylformamid und anschliessendes Ausfällen mit Wasser oder destillativ erfolgen.

Die erfindungsgemässe Phosgenierung erfolgt nach an sich bekannten Methoden, wie sie beispielsweise in Liebigs Annalen der Chemie, Band 562, Jahrgang 1949, Seiten 75 bis 109, in Ullmanns Encyclopädie der technischen Chemie, Band 14, 4. Auflage, 1977, Seiten 350 bis 354 oder in Houben-Weyl, Methoden der organischen Chemie, Band E4, 4. Auflage, 1983, Seiten 741 bis 753 beschrieben sind.

Die Umsetzung kann kontinuierlich oder diskontinuierlich, bevorzugt in Gegenwart eines inerten Lösungsmittels durchgeführt werden. Geeignete Lösungsmittel sind die für Phosgenierungen üblicherweise verwendeten Lösungsmittel, wie aliphatische, cycloaliphatische oder aromatische Kohlenwasserstoffe, Halogenkohlenwasserstoffe, Nitrokohlenwasserstoffe, aliphatisch-aromatische Ether, aromatische Ether, Carbonsäureester, Carbonsäurenitrile, Sulfone, Phosphorsäurehalogenide oder Phosphorsäureester. Als Beispiele für geeignete Lösungsmittel seien genannt: Trimethylpentan, Decahydronaphthalin, Toluol, 1,2-Dichlorbenzol, Chlorbenzol, Chlortoluol, 1,2-Dichlorbenzol, Nitrobenzol, Anisol, Phenetol, Diphenylether, Essigsäurebutylester, Tetramethylensulfon, Phosphoroxychlorid, Phosphorsäuretrimethylester. Bevorzugt wird technisches 1,2-Dichlorethan oder technisches Chlorbenzol oder technisches 1,2-Dichlorbenzol als Lösungsmittel verwendet. Beliebige Gemische der beispielhaft genannten Lösungsmittel können selbstverständlich ebenfalls eingesetzt werden. In den meisten der beispielhaft genannten Lösungsmittel weist 4,4'-Diamino-phenylbenzylether bei niedrigen Temperaturen nur eine geringe Löslichkeit auf.

Bei der Durchführung des erfindungsgemässen Verfahrens erfüllen demzufolge die beispielhaft genannten Lösungsmittel insbesondere bei den niedrigen Phosgeniertemperaturen vor allem die Funktion eines Suspendiermittels für das Diamin und erst bei höheren Temperaturen und mit zunehmender Überführung des Ausgangsmaterials in das Diisocyanat die Funktion eines echten Lösungsmittels für das Ausgangsmaterial und insbesondere das Verfahrensprodukt.

Bei den beim erfindungsgemässen Verfahren einzusetzenden Gemischen aus zu phosgenierendem Ausgangsmaterial und Lösungsmittel handelt es sich im allgemeinen um «Lösungssuspensionen» mit einem Gehalt an Diamin von ca. 2 bis 70 Gew.-%. Der Begriff «Lösungssuspension» soll andeuten, dass das Diamin teilweise gelöst und teilweise suspendiert vorliegt.

Die erfindungsgemässe Phosgenierungsreaktion kann beispielsweise nach dem bekannten Prinzip der «Kalt-Heiss-Phosgenierung» zweistufig oder nach dem Prinzip der «Heiss-Phosgenierung» einstufig erfolgen. Bei der «Kalt-Heiss-Phosgenierung» erfolgt die Umsetzung des zu phosgenierenden Ausgangsmaterials zu Beginn der Reaktion im allgemeinen bei −20 bis +40 °C, vorzugsweise −10 bis +30 °C und die anschliessende Heissphosgenierung bei 40 bis 260 °C, vorzugsweise 80 bis 220 °C. Bei dieser «Kalt-Heiss-Phosgenierung» kann der Bereich zwischen der Anfangstemperatur und der erhöhten Temperatur gleichmässig oder in Sprüngen durchlaufen werden.

Bei der «Heissphosgenierung» kommt das zu phosgenierende Ausgangsmaterial mit dem Phosgen sofort bei Temperaturen von 40 bis 260 °C, vorzugsweise 80 bis 220 °C in Kontakt.

Bei allen Varianten der erfindungsgemässen Phosgenierung erfolgt diese vorzugsweise unter Normaldruck oder bei erhöhtem Druck. Der Reaktionsdruck liegt im allgemeinen bei 0,9 bis 100, vorzugsweise 1 bis 60 bar.

Im allgemeinen wird bei der erfindungsgemässen Phosgenierungsreaktion das zu phosgenierende Ausgangsmaterial mit einer 1- bis 10-fachen, vorzugsweise 1,05- bis 6-fachen stöchiometrischen Menge an Phosgen zusammengebracht. Die genannte Phosgenmenge kann in einer Portion oder auch in Teilmengen in das Reaktionsgemisch eingegeben werden.

Es kann vorteilhaft sein, z.B. bei einer diskontinuierlichen Arbeisweise, erst einen Teil der zu verwendenden Phosgenmenge in das Reaktionsgemisch einzubringen und den restlichen Anteil in weiteren Portionen oder stetig über einen längeren Zeitraum verteilt in das Reaktionsgemisch einzubringen.

Grundsätzlich lässt sich die erfindungsgemässe Phosgenierung des Diamins durch Zugabe von Katalysatoren, beispielsweise Dimethylformamid, und/oder Säureakzeptoren, beispielsweise Pyridin, beschleunigen . Im allgemeinen jedoch sind die Reaktionsgeschwindigkeiten bei der Phosgenierung des Diamins auch ohne Zugabe eines derartigen Katalysators ausreichend.

Die Reaktionsdauer bei der erfindungsgemässen Phosgenierung ist von den angewandten Reaktionsbedingungen insbesondere von den Reaktionstemperaturen, vom Phosgenüberschuss, von der Verdünnung mit Lösungsmittel und von gegebenenfalls zugegebenen Katalysatoren und/oder Säureakzeptoren abhängig.

Nach Beendigung der Phosgenierungsreaktion wird das Reaktionsgemisch in an sich bekannter Weise durch Abtrennung von gasförmigen Bestandteilen (Chlorwasserstoff, überschüssiges Phosgen) und destillativer Entfernung des Lösungsmittels aufgearbeitet. Vor der destillativen Entfernung des Lösungsmittels können gegebenenfalls vorliegende feste Nebenprodukte durch Filtration oder Zentrifugieren entfernt werden. Das nach der destillativen Entfernung des Lösungsmittels als Destillationsrückstand anfallende Rohprodukt kann gewünschtenfalls durch Umkristallisieren aus einem geeigneten inerten Lösungsmittel, beispielsweise Ligroin, oder vorzugweise destillativ gereinigt werden.

Obwohl es sich bei dem erfindungsgemässen Diisocyanat um eine thermostabile Substanz handelt, kann es zweckmässig sein, die Reindestillation des Diisocyanats ohne grosse Temperaturbelastung, beispielsweise mittels eines Dünnschichtverdampfers durchzuführen. Gewünschtenfalls kann das erfindungsgemässe Diisocyanat

nach seiner Reindarstellung auch durch Tempern bei Temperaturen von 160 bis 250 °C, vorzugsweise 180 bis 230 °C von störenden Nebenprodukten, beispielsweise thermolabilen, chlorhaltigen Verbindungen befreit werden.

Bei der erfindungsgemässen Verwendung des neuen Diisocyanats zur Herstellung von Polyurethankunststoffen, insbesondere von massiven oder zellförmigen Polyurethanelastomerem wird das erfindungsgemässe Diisocyanat anstelle der bislang für diesen Verwendungszweck eingesetzten Diisocyanate mit den bekannten Reaktionspartnern zur Umsetzung gebracht (vgl. diesbezüglich beispielsweise die bereits eingangs genannten Literaturstellen oder auch «Kunststoff-Handbuch», Band VII, «Polyurethane» von Vieweg und Höchtlen, Carl Hanser Verlag München (1966), insbesondere Seiten 206–297).

So erfolgt beispielsweise die Herstellung von Polyurethanelastomeren unter Verwendung des erfindungsgemässen Diisocyanats durch dessen Umsetzung mit

a) Di- oder trifunktionellen Polyhydroxylverbindungen des Molekulargewichtsbereichs 400 bis 10 000, vorzugsweise 800 bis 3 000, vorzugsweise den entsprechenden Polyhydroxypolyestern oder Polyhydroxypolyethern,

b) Kettenverlängerungsmitteln des Molekulargewichtsbereichs 60 bis 399, d.h. mit im Sinne der Isocyanat-Additionsreaktion difunktionellen Verbindungen mit alkoholischen Hydroxylgruppen oder primären bzw. sekundären Aminogruppen, gegebenenfalls in Gegenwart von

c) weiteren aus der Chemie der Polyurethanelastomeren an sich bekannten Hilfs- und Zusatzmitteln.

Die Umsetzung kann nach dem bekannten Prepolymerverfahren (Umsetzung des Diisocyanats mit der Komponente a) unter Einhaltung eines Äquivalentverhältnisses von Isocyanatgruppen zu gegenüber Isocyanatgruppen reaktionsfähigen Gruppen von grösser als 1,3:1 und anschliessende Umsetzung des so erhaltenen NCO-Prepolymeren mit der Komponente b) oder aber auch einstufig durch Umsetzung des Diisocyanats mit einem Gemisch der Komponenten a) und b) erfolgen. Bei beiden Varianten liegt das Äquivalentverhältnis von Isocyanatgruppen zur Gesamtmenge der gegenüber Isocyanatgruppen reaktionsfähigen Gruppen im allgemeinen bei 0,8:1 bis 1,3:1, vorzugsweise 0,95:1 bis 1,1:1. Die Temperaturen, bei welchen diese Umsetzungen durchgeführt werden, liegen im allgemeinen bei 60 bis 180 °C, vorzugsweise bei 80 bis 150 °C. Die Umsetzungen können in Anwesenheit oder auch in Abwesenheit von geeigneten inerten Lösungsmitteln erfolgen.

Bei den mit dem erfindungsgemässen Diisocyanat hergestellten Polyurethankunststoffen, insbesondere Polyurethanelastomeren kann es sich sowohl um massive als auch um zellförmige Produkte handeln. Die Herstellung beider Typen von Polyurethanelastomeren erfolgt nach den bekannten Verfahren, wie sie beispielsweise in der zuletzt genannten Literaturstelle beschrieben sind. So erfolgt beispielsweise die Herstellung von zellförmigen Polyurethanelastomeren unter Verwendung bzw. Mitverwendung von Wasser als Kettenverlängerungsmittel.

Die mit dem erfindungsgemässen Diisocyanat hergestellten Kunststoffe besitzen hochwertige mechanische und thermische Eigenschaften. Sie sind deshalb hervorragend geeignet für Feder- und Dämpfungselemente, Puffer, Radbeläge, Dichtungen, Schuhsohlen und ähnliche Einsatzgebiete, bei denen das Material extrem mechanischen und thermischen Beanspruchungen ausgesetzt ist.

Die folgenden Beispeile sollen die Erfindung näher erläutern. Prozentangaben beziehen sich auf Gewichtsprozente.

Beispiel 1

(Herstellung von 4,4'-Diisocyanatophenylbenzylether)

In einer 6 l-Laborphosgenierapparatur wurde eine Lösung von 400 g Phosgen in 1,6 l wasserfreiem 1,2-Dichlorethan vorgelegt. In die Lösung wurde unter Rühren und Kühlung eine auf 70 °C erwärmte Lösung von 214 g 4,4'-Diaminophenylbenzylether (analytisch bestimmte Reinheit: 99,7%) in 2,2 l wasserfreiem 1,2-Dichlorethan so eingetropft, dass die Reaktionstemperatur zwischen 10 und 20 °C lag. Anschliessend wurde das Reaktionsgemisch innerhalb von 3 Stunden unter weiterem Einleiten von Phosgen (etwa 50 g/h) zum Rückfluss (77 °C) erhitzt. Nach weiteren 1,5 Stunden Phosgenieren am Rückfluss war eine klare Lösung entstanden. Das fertige Reaktionsgemisch wurde destillativ von überschüssigem Phosgen und vom Lösungsmittel befreit und dann im Vakuum fraktioniert destilliert. Nach einem Verlauf (11 g gelbliche Flüssigkeit) destillierte 4,4'-Dissocyanato-phenylbenzylether bei 0,4 mbar und 180 bis 195 °C als farblose Flüssigkeit über, die rasch zu Kristallen vom Schmelzpunkt 88–90 °C erstarrte.

Rückstand: 14 g dunkel gefärbtes Festprodukt.

Ausbeute an Diisocyanat: 234 g (92% der Theorie).

$C_{15}H_{10}N_2O_3$ (266,3)
hydr. Chlor: 580 ppm
NCO-Gehalt: ber. 31,6% gef. 31,8%
31,9%

Das Diisocyanat liess sich praktisch rückstandsfrei redestillieren.

Beispiel 2

(Herstellung von 4,4'-Diisocyanatophenylbenzylether)

In einer 6 l-Laborphosgenierapparatur wurde eine Lösung von 400 g Phosgen in 1,6 l wasserfreiem Chlorbenzol vorgelegt. In die Lösung wurde unter Rühren und Kühlung eine auf 90 °C erwärmte Lösung von 214 g 4,4'-Diaminophenylbenzylether (analytisch bestimmte Reinheit: 95,9%) in 2 l wasserfreiem Chlorbezol so eingetropft, dass die Reaktionstemperatur zwischen 10 und 20 °C lag. Anschliessend wurde das Reaktionsgemisch innerhalb von 3,5 Stunden unter

weiterem Einleiten von Phosgen (etwa 50 g/h) zum Rückfluss (125 °C) erhitzt. Nach einer weiteren Stunde Phosgenieren am Rückfluss was eine fast klare Lösung entstanden. Dann wurde das Reaktionsgemisch destillativ von überschüssigem Phosgen und vom Lösungsmittel befreit. Das zurückleibende Rohprodukt wurde aus wasserfreiem Ligroin umkristallisiert. Nach dem Abfiltrieren, Waschen mit Petrolether und Trocknen wurden 211 g (83% der Theorie) 4,4'-Diisocyanato-phenylbenzylether in Form von farblosen Kristallen erhalten.

Schmelzpunkt: 88–89 °C
hydr. Chlor: 940 ppm

Von den erhaltenen Kristallen wurden 200 g einer Vakuumdestillation unterworfen. Das Diisocyanat destillierte ohne Vorlauf bei 0,4 mbar und 180 bis 190 °C als farblose, rasch erstarrende Flüssigkeit.

| | | |
|---|---|---|
| Ausbeute | : | 196 g |
| hydr. Chlor | : | 440 ppm |
| Destillationsrückstand | : | 1,3 g |

## Patentansprüche

1. 4,4'-Diisocyanato-phenylbenzylether.

2. Verfahren zur Herstellung von 4,4'-Diisocyanatophenylbenzylether, dadurch gekennzeichnet, dass man 4,4'-Diamino-phenylbenzylether in an sich bekannter Weise mit Phosgen umsetzt.

3. Verwendung von 4,4'-Diisocyanato-phenylbenzylether als Isocyanatkomponente bei der Herstellung von Polyurethankunststoffen nach dem Isocyanat-Polyadditionsverfahren.

## Revendications

1. L'éther de 4,4'-diisocyanato-phénylbenzyle.

2. Procédé de production de l'éther de 4,4'-diisocyanato-phénylbenzyle, caractérisé en ce qu'on fait réagir l'éther de 4,4'-diamino-phénylbenzyle d'une manière connue avec le phosgène.

3. Utilisation de l'éther de 4,4'-diisocyanato-phénylbenzyle comme composant isocyanate dans la préparation de matières plastiques du type polyuréthanne par le procédé de polyaddition d'isocyanate.

## Claims

1. 4,4'-Diisocyanato-phenyl benzyl ether.

2. A process for the preparation of 4,4'-diisocyanatophenyl benzyl ether, characterised in that 4,4'-diaminophenyl benzyl ether is reacted with phosgene in known manner.

3. The use of 4,4'-diisocyanato-phenyl benzyl ether as isocyanate component for the preparation of polyurethane plastics by the isocyanate polyaddition process.